# EUROPEAN PATENT APPLICATION

(11) **EP 2 797 003 A1**
(43) Date of publication of application: **29.10.2014**
(21) Application number: 13002264.3
(22) Date of filing: 26.04.2013
(51) Int. Cl.: G06F 12/02

(54) **Method for flash memory management of a secure element**

(71) Applicant: Giesecke & Devrient GmbH, 81677 München (DE)
(72) Inventor: Vui Huang, Tea, SE-12061 Stockholm (SE)

(57) **Abstract**

The invention relates to a method for flash memory (14) management of a secure element (10). The method comprises the step of providing an applet (16) in the secure element (10), and using the applet (16) for managing access to the flash memory (14) to organize erase and write cycles to the flash memory (14).

## Description

The invention relates to flash memory management of a secure element, a computer program product and a portable data carrier.

Flash memory is a storage medium which may be erased and written electronically. It is non-volatile, and therefore maintains the information contained within it without the need for power. It typically offers improved resistance to kinetic damage compared to other storage technologies, such as magnetic disks and tapes. However, the number of write and/ or erase cycles which may be performed on any particular block of flash memory is finite. Because a flash memory device holds many individual memory blocks, write and/ or erase cycles are often distributed across the entire memory array in order to extend the functional lifetime of each memory block.

The use of non-volatile memory, for example such as Flash, is known in the chip card industry. In this way, memories using Flash technology are therefore built into the integrated circuit of the card and used to store code and permanent data. Such memories are generally small, several hundred kilobytes. A typical lifespan of a flash memory is around 10 years of data retention. Its cycling endurance is around 100,000 cycles.

To prolong the lifespan of a portable data carrier and to reduce writing cycles into a non-volatile memory, DE 10 2010 054 783 A1 discloses to store received data in a volatile memory until the end of a session instead of using the non-volatile memory.

WO 2009/129340 A2 discloses the use of an intelligent data table associated with a flash memory for managing/ updating/ deleting the flash memory. US 7,934,133 B2 discloses discovering attacks by observing read/write cycles of a flash memory.

Nevertheless, despite the existence of various techniques to prolong lifetime of a flash memory, such as wear leveling, it remains desirable to extend the lifespan of a secure element with flash memory to approximate or match those of more durable Electrically Erasable Programmable Read-Only Memory (EEPROM) based secure elements.

It is the object of the present invention to provide an according method for flash memory management which enables a prolongation of lifetime of a flash memory. It is a further object to provide a corresponding computer program product and a portable data carrier.

This object is solved by a method according to claim 1, a computer program product according to claim 15 and a portable data carrier according to claim 16. Preferred embodiments are set out in the dependent claims.

A method for flash memory management of a secure element comprises the step of providing an applet in the secure element. The applet is used managing access, i.e. creating, reading, deleting or updating privileged application data (PAD) stored in the flash memory, to the flash memory to organize erase and write cycles to the flash memory.

The method helps reducing the number of erase and write cycles to the flash memory resulting in a prolonged lifetime. By providing an applet in the secure element, i.e. the flash memory or another memory of the secure element, managing of the flash memory does not need to be made at the operating systems level, but can instead be made at application interpreter and run-time level, respectively. The suggestion is based on the consideration that the operating system does not know the meaning of the data, for example, how often it will be updated, and its relationship with other data to be updated. Hence, the method according to the invention is performed at "a middle layer" between an application running on the secure element and the operating system. The method reduces the need for overly complicated and heavy flash cache management in the secure element, hence keeping the costs of the flash memory in the secure element low.

A secure element as mentioned in the present description may be an UICC (Universal Integrated Chip Card), an eUICC (embedded UICC), a M2M (Machine-to-machine-module), an eSIM (embedded Subscriber Identity Module), an ePass (digital or e-passport) or an eID (electronic identity card), etc.

The applet for flash memory management may be a SIM Application Toolkit (STK) or a USIM Application Toolkit using a respective toolkit function to manage access to the flash memory. For example, the applet may be realized as a plug-in using Wib and PAD as an example. The invention can also be applied to JavaCard, SAT and other SIM applications as well.

According to a further embodiment the applet consolidates bits of data into a minimal number of pages of the flash memory. This helps to reduce the number of pages to be accessed and altered during a write cycle.

According to a further embodiment the applet collates repeat operations which are directed to a write or erase cycle to the same area, consisting of one or more blocks or pages, of the flash memory. This embodiment reduces the number of erase and/ or write cycles to the flash memory.

In particular, the repeat write operations are assigned to a first application data operation type having a first operation type parameter, wherein an access to the flash memory is performed not until then, when collating of the repeated write operations has ended. Similarly, the repeat erase operations are assigned to a second application data operation type having a second operation type parameter, wherein an access to the flash memory is performed not until then, when collating of the repeated erase operations has ended. For each page of the flash memory to be accessed, only one write or erase cycle may be performed to make all changes of the repeat write or erase operation (related to that page) at the same time. Hence, the number of write or erase cycles can be reduced due to block based operations.

According to a further embodiment the applet acts as virtual memory for frequently changing variables used by other applications of the secure element.

For example, variables being created during execution of an application of the secure element may be generated as global variables to virtually persist a frequently changing variable instead of writing it to the flash memory. As a result, in contrast to local variables no values have to be updated in the flash memory. In case, when the variables are found undefined during execution of the secure element, they will be reset to a default value to continue operation of the secure element. An undefined state can occur, for example, due to a power-off of the secure element or a reset of the secure element.

According to a further embodiment a counter and/or a flip-flop and/or a timer is derived from a message which is received via a cell broadcast channel. Preferably, a value representing the counter, the flip-flop and the timer, respectively, is stored into a global variable to avoid frequent updating the flash memory.

According to a further embodiment a single timer is associated with a local application stored in or accessible by the secure element to keep track of the current sequential counter position. This embodiment manipulates the 3GPP standard set timer command to off-load and store data in a mobile device RAM (Random Access Memory, i.e. a volatile memory) instead of the flash memory of the secure element. Depending on an application of the secure element which makes use of this embodiment, it can reduce the number of flash memory updates for frequently updated data down to zero. This solution doesn't require complex caching or predictive algorithms to be implemented in the secure element, hence keeping the costs of the flash memory down, which is the appeal of the flash memory in the first place.

According to a further embodiment the flash-memory comprises a high-durability memory section and a low-durability memory section, wherein frequently updated data is stored in the high-durability memory section. This solution is a means to 'force' the secure element to store frequently updated data in high-durability sections of the flash memory that has both high-durability (preferably only a small portion) and low-durability (preferably a big portion) sections. The operation system of the secure element is not able to distinguish whether a data will be frequently updated or not. Instead, an application of the secure element has a correspondin information as well as an interpreter/run-time. This solution enables the applet, i.e. an application, running on the secure element to override the default behavior of the operation system.

The invention further suggests a computer program product directly loadable into the internal memory of a digital computer, comprising software code portions for performing the steps of one of the preceding claims when said product is run on a computer.

In addition a portable data carrier, in particular secure element, is suggested comprising a flash memory and an applet for memory management of the flash memory to organize erase and write cycles to the flash memory being executed by an application stored on the portable data carrier. Furthermore, the data carrier may be adapted to carry out one of the preferred embodiment described above.

The invention will be explained in more detail by reference to the below described examples and the accompanying figures.
- Fig. 1: shows a secure element according to the invention having a processing unit and a flash memory.
- Fig. 2: shows a table in which information from a Cell Broadcast is used to derive different counters.

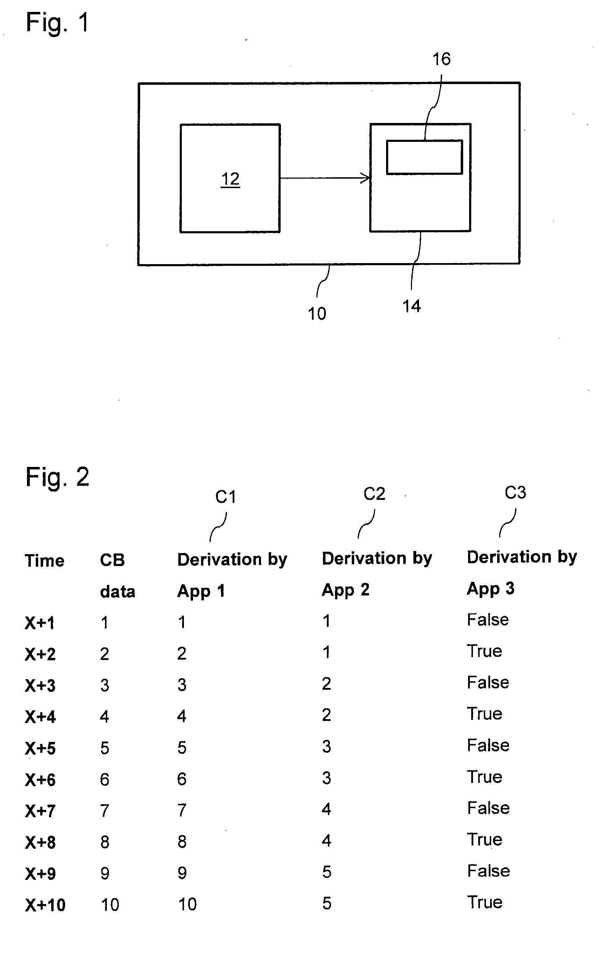

Fig. 1 illustrates a secure element 10, such as an UICC, eUICC, M2M, eSIM, ePass or eID, comprising at least a processing unit 12 and a non-volatile memory 14 in form of a flash memory. The secure element 10 can be used in a mobile equipment, for example. The processing unit 12 can access the flash memory 14 by either writing, erasing, updating or deleting data. The flash memory 14 can sustain only a limited number of write and erase cycles before it fails. Updating of the flash memory 14 needs to be made in large blocks of data, thus the secure element will collectively have a shorter life span and requires more frequent replacements. The typical cycling endurance is around 100,000 cycles.

A file system (not shown) of a portable data carrier, such as an secure element, comprises according to "Handbuch der Chipkarten", 5. Auflage, Wolfgang Rankl, Wolfgang Effing; Carl Hanser Verlag 2008, pages 502 ff. in section "Dateiverwaltung" directory files, such as the Master File (MF), or Dedicated Files (DF) and single files, called Elementary Files (EF). The files system is located in a rewritable non-volatile memory, such as the flash memory of the secure element. Hence, the files system is available after deactivation of the secure element, too. File-management and organization of the files is made by an operating system of the secure element. As known to the skilled person, a part of the file system comprises, for example, an application with a Dedicated File (DF) and associated files EF.

The block-based flash memory is partitioned in pages and needs to be erased and written in these units. If each page is 256 bytes, then a secure element with a flash memory size of 131 Kbytes (134,144 bytes) will be partitioned into 524 pages of 256 bytes. Even if an application running on the secure element or a remote server needs to update 1 byte, it needs to update all 256 bytes as that is the minimum unit for writing. Hence, the wear and tear on the memory can be quite broad if the data is separated over multiple blocks.

To prolong the life of the flash memory, the number of erase and write cycles to the flash memory has to be reduced. This is done by means of an applet 16 being stored in the flash memory 14 (or any other memory of the secure element 10 or the mobile equipment the secure element is attached to).The following solutions are described using Wib and PAD (Privileged Application Data) plug-in as an example of a STK application of a SIM card representing the secure element. However, it is to be noted that the solutions can be applied to JavaCard, SAT and other SIM applications as well.

The PAD plug-in is a Wib data management plug-in for applications defined by SmartTrust and others and approved by the operator. The plug-in is used to create, read, update, and delete privileged application data stored in the flash memory of the SIM card. PAD operation type field identifies the type of operation that is requested. The possible values for the operation type are the following: "C" = Create, "D" = Delete, "R" = Read, "U" = Update.

The solution involves using STK functions as virtual memory for frequently changing variables, consolidating bits of data into minimal number of flash pages, as well as collating repeat operations to the same flash memory areas.

In a first example, a block collation and a consolidation of creating and updating of data are illustrated. The following is a fragment of a conventional Wib WML code. The PAD operation type parameter "U" identifies an update operation. The operation type dependent data "\xE1$(AD1)", "\xE2$(AD2)", and so on, indicates the information to be updated:
<plugin name="*PAD" destvar="R1" params="U\xE1$(AD1)"/>
<plugin name="*PAD" destvar="R2" params="U\xE2$(AD2)"/>
<plugin name="*PAD" destvar="R3" params="U)\xE3$(AD3)"/>
<plugin name="*PAD" destvar="R4" params="U\xE4$(AD4)"/>
<plugin name="*PAD" destvar="R5" params="U\xE5$(AD5)"/>
<plugin name="*PAD" destvar="R6" params="U\xE6$(AD6)"/>

It is a common operation in applications like "Adwise" to update the PAD's transparent EF storage file with multiple data. This works fine on EEPROM memory, but it uses up a flash memory write cycle very quickly and hence reduces its life span accordingly. Therefore, in the PAD command a support block update is used, as outlined below:
<plugin name="*PAD" destvar="R1" params="B\x00"/>
<plugin name="*PAD" destvar="R1" params="U\xE1$(AD1)"/>
<plugin name="*PAD" destvar="R2" params="U\xE2$(AD2)"/>
<plugin name="*PAD" destvar="R3" params="U\xE3$(AD3)"/>
<plugin name="*PAD" destvar="R4" params="U\xE4$(AD4)"/>
<plugin name="*PAD" destvar="R5" params="U\xE5$(AD5)"/>
<plugin name="*PAD" destvar="R6" params="U\xE6$(AD6)"/>
<plugin name="*PAD" destvar="R1" params="B\xFF"/>

The PAD operation type parameter "B" identifies a block operation according to the invention. The operation type dependent data "\x00" indicates start, and "\xFF" indicates end. Hence, in the above example, the flash memory friendly PAD plug-in does not perform any writes to the flash memory until the block update has ended. Once the block update has ended, it collates the data and tries to fit them into as few flash memory pages as possible. Once that is done, a group operation of making all changes to each page at the same time in as few write cycles as possible is performed.

For example, it is assumed that data for E1-E3 are in page 1, and data for E4-E6 are in page 2. Then, the PAD plug-in makes the 1st write to page 1 updating E1-E3 at the same time and the 2nd single write to page 2 updating E4-E6 at the same time.
Write #1: Update page 1 with E1-E3
Write #2: Update page 2 with E4-E6

Conventionally, six writes have to be made as indicated below:
Write #1: Update page 1 with E1
Write #2: Update page 1 with E2
Write #3: Update page 1 with E3
Write #4: Update page 2 with E4
Write #5: Update page 2 with E5
Write #6: Update page 2 with E6

As illustrated, the wear of the flash memory can be reduced by three times or more in the example above. Without the proposed procedure, the flash memory will fail in 100,000/3 = 33,333 iterations. With the invention, the flash memory will fail in 100,000/1 = 100,000 iterations.

The same applies for PAD a create operation, which is illustrated below. The PAD operation type parameter "C" identifies a create operation. The operation type dependent data "\xE1$\x64", "\xE2$\x64", and so on indicates the information to be updated. The PAD operation type parameter "B" again identifies the block operation. The operation type dependent data "\x00" indicates start, and "\xFF" indicates end.
<plugin name="*PAD" destvar="R1" params="B)x00"/>
<plugin name="*PAD" destvar="R1" params="C\xE1\x64"/>
<plugin name="*PAD" destvar="R2" params="C\xE2\x64"/>
<plugin name="*PAD" destvar="R3" params="C\xE3\x64"/>
<plugin name="*PAD" destvar="R4" params="C\xE4\x64"/>
<plugin name="*PAD" destvar="R5" params="C\xE5\x64"/>
<plugin name="*PAD" destvar="R6" params="C\xE6\x64"/>
<plugin name="*PAD" destvar="R1" params="B\xFF"/>

In a second example, a multiple deletion of data is illustrated. The following is a fragment of a Wib WML code. The PAD operation type parameter "D" identifies a conventional delete operation.
<plugin name="*PAD" destvar="R1" params="D\xE1"/>
<plugin name="*PAD" destvar="R2" params="D\xE2"/>
<plugin name="*PAD" destvar="R3" params="D\xE3"/>
<plugin name="*PAD" destvar="R4" params="D\xE4"/>
<plugin name="*PAD" destvar="R5" params="D\xE5"/>
<plugin name="*PAD" destvar="R6" params="D\xE6"/>

It is a common operation in applications like "Adwise" to clear the PAD's transparent EF storage file before writing new data into it. This works fine on EEPROM memory, but it uses up a flash memory write cycle very quickly and hence reduces its life span accordingly. Hence, multiple deletes in the PAD command are supported, such as:
<plugin name="*PAD" destvar="R1"
params="D\xE1\xE2\xE3\xE4\xE5\xE6"/>

Assuming all PAD tags E1 to E6 reside on the same flash memory page, this command allow the PAD plug-in to perform a single write to that flash memory page to delete all six data. Otherwise, it would need to perform six writes to that page and reducing the limited write cycles on that page by six times. This means that iterations to failure with six separate writes each time =100,000/6 =16,666. Iterations to failure with one consolidated write each time =100,000/1 =100,000

In a third example, using of one or more global variables to persist a respective variable is illustrated. In Wib, local variables are created during the execution of a wiblet (i.e. an application in Wib) and deleted automatically when the (same) wiblet stops executing. In contrast, global variables are persistent throughout the execution of multiple wiblets. Global variables maximum life-length is limited by a SIM reset and power-off of the secure element. Global variables are also cleared when Wib abnormally terminates execution of a wiblet. That may happen when a user has pressed 'cancel' (assuming that the secure element is integrated or part of a mobile device or something else) or when an error has occurred. In Wib 2.0 and later it is possible to install an exit handler with the WIG WML element handleexit. With this element it is possible to configure to not clear the global variables on error exit. For example, "<handleexit error='wiblet://errorhandler.wml?var'/>" in which a wiblet-URI ending with "?var" will cause variable values to be retained.

The principle here is to use global variables to virtually persist frequently-changing variables instead of constantly writing it to PAD's flash memory area. To enable this, the WML "card" element must never be set to "clear='global"' and the "wml" element must never be set to "clearonentry='true"'. In Wib 2.0, all Wiblets on the SIM must have an exit handler that is configured to not clear the global variables on error exit. In Wib 1.3, the Wib specification and implementation must be updated to specify that the global variables are never cleared when Wib abnormally terminates execution of a wiblet. This allows the global variable to function as a virtual persistent storage as long as the secure element is not reset and the mobile equipment comprising the secure element, such as a phone, is on. Should a reset of the SIM or a power-off of the mobile equipment occur, the application will find that the global variable is undefined and proceeds to reset it to a default value to continue operation.

In a fourth example, counters and/ or timer and/ or flip-flops are derived from information being available outside the secure element. Such information is available from Cell Broadcast (CB). CB is a technology that allows a text or binary message to be defined and simultaneous distributed to a huge number of terminals at once. Some mobile operators use CB for communicating an area code of an antenna cell to a mobile user, for nationwide or citywide alerting, weather reports, mass messaging, location based news, etc.. The invention here is to not store frequently changing data like counters, flip-flops, and timers in the flash memory, but to instead derive them as needed from a CB channel. A condition that should be met is that it is acceptable by the application for the derived value to be in semi-random order.

For example, an operator will transmit a looping stream of ever-changing data over a defined CB channel. For example: "1,2,3,4,5,6,7,8,9,..100". There is only one value at each time interval. Hence at X second the value is 1, then at X+1 second the value moves to 2 etc. After the last value, it restarts from the first value.

Wib has the event "Incoming Cell Broadcast Message" which is able to relay the CB message to a Wiblet. The Wiblet will put this value into a global variable that can be accessed by all other Wib applications (wiblets) on the SIM. If an application needs an increasing value, it may use this derived value as it is. If another application needs an increasing value at a slower rate, it may count by the tens. For example, it can consider the values 1-2 as '1' and the values 3-4 as '2' etc. If an application needs a Boolean / flip-flop value, it may consider even numbers as '1' and odd numbers as '0'. This is illustrated in Fig. 2 which shows a table in which information from a CB is used to derive different counters C1 ("Derivation by App1") and C2 ("Derivation by App2") and Boolean values C3 ("Derivation by App3") as described above.

In a fifth example, an expiry state of STK timers will be used to store data in a volatile memory instead of the flash memory. From version 1.3, Wib is equipped with 8 timers that may be utilized by the Wib service developer. A timer can be thought of as a clock that can be set to alarm at a certain time into the future relative to the present time. In other words it functions as a count-down. When the timer fires, Wib executes an installed wiblet specified when the timer was started.

In this example, it will be kept track of the current sequential counter position by associating a single timer with a local wiblet URL of a corresponding representational value. The application associates a local wiblet of a certain URI until it needs to advance it. When it does that, it deactivates the local wiblet for the previous counter position, and associates the timer with a new local wiblet that represents the current counter position. Nothing the subscriber does on the mobile equipment can distort this except for a power-cycle. In this case, the counter will restart at 1.

In other words, this solution manipulates a standard set timer command, for example a 3GPP standard set timer command, to off-load and store data in the mobile device RAM instead of the flash memory of the secure element. Depending on the application running on the secure element, this technique can reduce the number of flash updates for frequently updated data down to zero. This solution doesn't require complex caching or predictive algorithms to be implemented in the secure element, hence keeping the costs of the flash memory down.

The memory demand calculates to: 6 padlesscounter Wiblets x 4 bytes = ~ 24 bytes plus 1 padlesscounter logic = ~314 bytes making a total of ~338 bytes.

Below Wiblet URIs for a counter that counts from 1 to 6 and resets are illustrated:
wiblet://smarttrust.com/padlesscounter1
wiblet:/ / smarttrust.com/ padlesscounter2
wiblet:/ / smarttrust.com/ padlesscounter3
wiblet://smarttrust.com/padlesscounter4
wiblet:/ / smarttrust.com/ padlesscounter5
wiblet: / / smarttrust.com/ padlesscounter6

The procedure is as follows:
1. Get the timer associated with "wiblet: / / smarttrust.com/ padlesscounter1".
2. If no timer is associated, check the next Wiblet in the progression. Restart the sequence.
3. If a timer is associated, it means that the counter value is the value represented by this wiblet.

In the example below, illustrating a sample code extract, "wiblet://smarttrust.com/padlesscounter1" represents a counter value of 1. It is proceeded to deactivate the timer for this Wiblet, and then a timer for the next Wiblet is associated and started in the progression with a very long or infinite duration.
<timer operation="get" var="Associated"
href="wiblet:/ / smarttrust.com/ padlesscounter1"/ >
<conditionaljump compare="$(Associated)">
<test href="#CheckCounter2" value=""/>
</ conditionaljump>
<setvar name="Counter" value="1"/>
<timer operation="deactivate" var="TIMER"
href="wiblet:/ / smarttrust.com/ padlesscounter1"/ >
<setvar name="TIMER" value="100000"/ >
<timer operation="start" var="TIMER"
href="wiblet: / / smarttrust.com/ padlesscounter2"/ >

In a sixth example, a plug-in installation state will be used. A Wib plug-in is a SIM located component providing additional features to SmartTrust Wib. This extension mechanism enables access to functionality which is not part of the standard Wib command set and that can be added at a later stage.

The idea is to keep track of the current sequential counter position by enabling/ installing a single counter pulg-in (CTR plug-in) of a corresponding representational value. The application enables/ installs a CTR plug-in of a certain number until it needs to advance it. When it does that, it disables/removes the plug-in for the previous counter position, and enables/ installs a CTR plug-in that represents the current counter position.

For clarity, the example below uses the format "CTRx" for the plug-in names. These results in 8 bytes per 'counter' written to the browserinfo EF file in the SIM card. The plug-in name could be truncated to "Cx" to reduce the size to 6 bytes per 'counter'.
8 bytes
1 C T R 1 ...
04 43 54 52 31 00 00 01
6 bytes
1 C 1 ...
02 43 31 00 00 01

One Wiblet containing the padless-counter logic = ~305 bytes and 6 padless-counter plug-ins with no functionality: CTR1, CTR2, CTR3, CTR4, CTR5, CTR6.

This seems to take up more space than writing 1 byte to the flash memory, but if the browserinfo EF file resides in a high-durability flash memory part of the SIM which has more than 100,000 write cycles then wearing down a low-durability flash memory can still be avoided where the PAD storage is located. In the low-durability flash-memory less than 100,000 write cycles are possible. The high-durability and the low-durability flash memories can be sections of the flash memory 14 illustrated in Fig. 1.

This proceding is also particularly useful for applications that need to have a counter on deployed SIM cards (in customer's hands) but have not reserved/ defined or do not have sufficient PAD storage space.

In the example below, a flow of an advancing counter, showing the content of browserinfo at each stage, is illustrated:
1. Detect that CTR1 plug-in is the current state
   <getbrowserinfo destvar="browserinfo"/>
   82000101FF090241 4400000104444543 5200000104454E43 5200000102465000 0001024144000104 5349474E00000102 4444000001024445 0000010443545231 000001
2. Remove CTR1 plug-in
   <removePlugin name="CTR1" variableId="1"/>
   82000101ff080241 4400000104444543 5200000104454e43 5200000102465000
   0001024144000104 5349474e00000102 4444000001024445 000001
3. Advance counter by installing CTR2 plug-in
   <installPlugin name="CTR2" manufacturerVersion="\x01\x00\x00" variableId="126">
   82000101ff090241 4400000104444543 5200000104454e43 5200000102465000 0001024144000104 5349474e00000102 4444000001024445 0000010443545232 000001

The proposed method comprises a plurality of advantages:
Frequently changing and persistent counters (for example: up-down, synchronous/ asynchronous, decade, timer etc), Boolean (true and false) and
flip-flop (for example: 1 and 0) values are the main drivers of wear and tear on flash memory, whose key weakness is its limited number of write and
erase cycles before it fails. This proposal shifts these flash-destructive actions away from the flash memory, thus enabling the flash memory to have a prolonged life serving infrequently changed data. For example, without the invention the application could make 10,000 updates a month and cause a failure in 100,000/10,000 or 10 months (<1 year). With the invention, the most frequent updates are removed, resulting in 1,000 updates a month. This would defer the failure to 100,000/1,000 = 100 months (~8 years), an increase of 7 years.

This proposed method collates small bits of data into a bigger block, thus reducing the number of flash 'pages' that needs to be updated. For example (assuming each page is 256 bytes), instead of making separate writes of 5 small data (total of ~50 bytes) into 5 different pages, this method collates the 5 small data into 1 page, thus reducing unnecessary wear and tear on the 4 other pages of flash memory. Also, by writing the 5 small data in one write instead of 5 each time, the wear on the flash memory of that page is further reduced as well.

Collectively, this allows operators and users of the flash-based smartcards to practically raise the mean time between failures (MTBF) and achieve lower costs of operation (avoid frequent replacements etc.) than using EEPROM-based smartcards.

This invention allows the manufacturer of flash-based smartcards with this technology to offer longer-lifespan flash-based smartcards than competitors without incurring any substantial hardware or manufacturing cost or upgrades to the factory floor and manufacturing facility. This provides a competitive advantage of offering the product at the same price, but at a much higher value.

Manufacturers can also develop and offer even cheaper smartcards. One strategy used today is to have different types of flash memory in the smartcard. A small section of expensive hard-wearing, high durability flash memory to cater for frequently changing data described in this invention, and the rest consists of cheaper low-wearing and less durable flash memory. By applying this invention appropriately, the manufacturers can reduce or maybe even eliminate the need for the expensive flash and ship a smartcard that consists only of cheap flash memory.

The invention applies to any SIM application that requires frequently changing and persistent counters (for example: up-down, synchronous/asynchronous, decade, timer etc.), Boolean (true and false) or flip-flop (for example: 1 and 0) values.

The invention can be used in "Adwise" where counters are used frequently and continually to schedule the display of advertisements, and to keep track of cyclic storage pointers. It can also be used in SmartCity applications like "Amici" and games that modify internal settings every time they are used or played.

It can also be used in the future where security or payment related applications utilize "nonce" in their processing flow. "Nonce" is an arbitrary number used only once in a cryptographic communication to ensure that old communications cannot be reused in replay attacks. A nonce may be used to ensure security for a stream cipher. Where the same key is used for more than one message then a different nonce is used to ensure that the key stream is different for different messages encrypted with that key. Often the message number is used; consequently it changes quite often and needs to be persisted.

**Reference numbers**

| | |
|---|---|
| 10 | secure element |
| 12 | processing unit |
| 14 | flash memory |
| 16 | applet |
| C1 | derived number |
| C2 | derived number |
| C3 | Boolean value |

## Claims

1. A method for flash memory (14) management of a secure element (10), comprising:
- providing an applet (16) in the secure element (10), and
- using the applet (16) for managing access to the flash memory (14) to organize erase and write cycles to the flash memory (14).

2. The method according to claim 1, wherein the applet (16) consolidates bits of data into a minimal number of pages of the flash memory (14).

3. The method according to claim 1 or 2, wherein the applet (16) collates repeat operations which are directed to a write or erase cycle to the same area, consisting of one or more blocks or pages, of the flash memory (14).

4. The method according to claim 3, wherein the repeat write operations are assigned to a first application data operation type having a first operation type parameter, wherein an access to the flash memory (14) is performed not until then, when collating of the repeated write operations has ended.

5. The method according to claim 3 or 4, wherein the repeat erase operations are assigned to a second application data operation type having a second operation type parameter, wherein an access to the flash memory (14) is performed not until then, when collating of the repeated erase operations has ended.

6. The method according to one of claims 3 to 5, wherein, for each page of the flash memory (14) to be accessed, only one write or erase cycle is performed to make all changes of the repeat write or erase operation at the same time.

7. The method according to one of the preceding claims, wherein the applet (16) acts as virtual memory (14) for frequently changing variables used by other applications of the secure element (10).

8. The method according to claim 7, wherein variables being created during execution of an application of the secure element (10) are generated as global variables to virtually persist a frequently changing variable instead of writing it to the flash memory (14).

9. The method according to claim 8, wherein, when the variables are found undefined during execution of the secure element (10), they will be reset to a default value to continue operation of the secure element (10).

10. The method according to one of the preceding claims, wherein a counter and/ or a flip-flop and/ or a timer is derived from a message which is received via a cell broadcast channel.

11. The method according to claim 10, wherein a value representing the counter, the flip-flop and the timer, respectively, is stored into a global variable.

12. The method according to one of the preceding claims, wherein a single timer is associated with a local application stored in or accessible by the secure element (10) to keep track of the current sequential counter position.

13. The method according to one of the preceding claims, wherein the flash-memory (14) comprises a high-durability memory (14) section and a low-durability memory (14) section, wherein frequently updated data is stored in the high-durability memory (14) section.

14. The method according to one of the preceding claims, wherein the applet (16) is a SIM Application Toolkit or a USIM Application Toolkit using a respective toolkit function to manage access to the flash memory (14).

15. A computer program product, computer program product directly loadable into the internal memory (14) of a digital computer, comprising software code portions for performing the steps of one of the preceding claims when said product is run on a computer.

16. A portable data carrier, in particular secure element (10), comprising a flash memory (14) and an applet (16) for memory (14) management of the flash memory (14) to organize erase and write cycles to the flash memory (14) being executed by an application stored on the portable data carrier.
